# FASCICULE DE BREVET EUROPEEN

(11) **EP 4 073 149 B1**
(45) Date de publication et mention de la délivrance du brevet: **16.07.2025**
(21) Numéro de dépôt: 20842002.6
(22) Date de dépôt: 08.12.2020
(51) Int. Cl.: C08J 3/24, C08K 5/13, C08K 5/42, C08K 5/5317, C08K 5/5333, C08L 15/00, B60C 1/00, C08C 19/06, C08K 3/04, C08K 3/36, C08K 9/06, C08L 7/00

(54) **COMPOSITE COMPRENANT UN ÉLÉMENT DE RENFORT ET UNE COMPOSITION DE CAOUTCHOUC**
VERBUNDWERKSTOFF, DER EIN VERSTÄRKUNGSELEMENT UND EINE KAUTSCHUKZUSAMMENSETZUNG UMFASST
COMPOSITE COMPRISING A REINFORCING ELEMENT AND A RUBBER COMPOSITION

(30) Priorité: 12.12.2019 FR 1914246
(43) Date de publication de la demande: 19.10.2022
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 CLERMONT-FERRAND Cedex 9 (FR); JEAN-BAPTISTE-DIT-DOMINIQUE, François, 63040 CLERMONT-FERRAND Cedex 9 (FR); JASSELIN, Adeline, 63040 CLERMONT-FERRAND Cedex 9 (FR)
(74) Mandataire: M.F.P. Michelin
(86) Numéro de dépôt international: PCT/FR2020/052329
(87) Numéro de publication internationale: WO 2021/116588

(56) Documents cités:
- WO-A1-2019/122587
- FR-A1- 3 031 746
- DATABASE WPI Week 201881, 2018 Derwent World Patents Index; AN 2018-80211N, XP002799900

## Description

### Domaine technique de l'invention

La présente invention est relative à un composite comprenant un élément de renfort comprenant une surface métallique et une composition de caoutchouc, articles finis ou semi-finis et pneus comprenant ces composites.

### Art antérieur

Il est connu, et habituel depuis de très nombreuses années, d'utiliser dans des pneus des compositions de caoutchouc dont la matrice élastomérique est réticulée au soufre, cette réticulation étant alors nommée vulcanisation. Le système de vulcanisation classique combine du soufre moléculaire et au moins un accélérateur de vulcanisation. Cependant, il est connu qu'un tel système peut pénaliser la mise en œuvre de la composition avant cuisson par le phénomène du grillage. On rappelle que le phénomène dit de "grillage" conduit rapidement, au cours de la préparation des compositions de caoutchouc, à des vulcanisations prématurées ("scorching"), à des viscosités à l'état cru très élevées, en fin de compte à des compositions de caoutchouc délicates à travailler et à mettre en œuvre industriellement.

Par conséquent, les systèmes de vulcanisation ont été perfectionnés au fil des années, en association avec les procédés de préparation des compositions de caoutchouc afin de maîtriser les inconvénients évoqués ci-dessus. Ainsi, les compositions sont souvent complexes et comprennent en plus du soufre moléculaire, ou d'un agent donneur de soufre moléculaire, des accélérateurs de vulcanisation, des activateurs, et éventuellement des retardateurs de vulcanisation.

Parmi les différents postes d'un pneu, les nappes de renforcement, qui comportent de manière connue une composition de caoutchouc et des câbles de renforcement, par exemple métalliques, noyés dans la composition de caoutchouc, requièrent généralement des formulations spécifiques pour la composition de caoutchouc.

Pour remplir efficacement leur fonction de renforcement de ces nappes, soumises comme on le sait à des contraintes très importantes lors du roulage des pneus, les éléments de renforcement filaires métalliques doivent satisfaire à un très grand nombre de critères techniques, parfois contradictoires, tels qu'une haute endurance en fatigue, une résistance élevée à la traction, à l'usure et à la corrosion, une forte adhésion au caoutchouc environnant, et être capables de maintenir ces performances à un niveau très élevé aussi longtemps que possible.

On comprend aisément que l'adhésion entre la gomme et les éléments de renforcement filaires métalliques est donc une propriété clé pour la pérennité de ces performances. Par exemple, le procédé traditionnel pour relier la gomme à de l'acier consiste à revêtir la surface de l'acier avec du laiton (alliage cuivre-zinc), la liaison entre l'acier et la gomme étant assurée par la sulfuration du laiton lors de la vulcanisation ou cuisson de l'élastomère présent dans la gomme.

La composition de caoutchouc de ces nappes de renforcement nécessite de ce fait un taux de soufre et d'oxyde de zinc élevé, une faible quantité d'acide stéarique, la présence de sel de cobalt, l'emploi d'accélérateur à phase retard longue afin, en particulier, d'assurer cette fonction d'adhésion. Or ces systèmes de vulcanisation à fort taux de soufre s'accompagnent de plusieurs inconvénients en plus de la complexité de leur composition. En effet, les systèmes de vulcanisation à fort taux de soufre constituent une forte contrainte lors de la fabrication de semi-finis, en particulier pour éviter des réticulations prématurées. Par ailleurs, on sait que l'adhésion entre l'acier et la gomme est susceptible de s'affaiblir au cours du temps, du fait de l'évolution progressive des sulfures formés sous l'effet des différentes sollicitations rencontrées, notamment mécaniques et/ou thermiques.

II est donc une préoccupation constante des manufacturiers de pneus de trouver des composites à base de métal et d'une matrice polymère diénique qui soient des solutions alternatives aux composites déjà existants et qui soient cohésifs sans qu'il soit nécessaire de recourir à une étape de sulfuration.

Des recherches ont été menées pour développer des systèmes de réticulation alternatifs à la vulcanisation, tout en simplifiant les compositions et leur préparation. Ainsi, les documents WO2014095582, WO2014095583, WO2014095585 et WO2014095586 décrivent des compositions de caoutchouc pour pneumatiques à base d'au moins un polymère comprenant des fonctions époxydes, d'un système de réticulation dudit polymère comprenant un polyacide carboxylique et d'un composé imidazole. Le polymère comprenant des fonctions époxydes est un élastomère diénique composant la matrice élastomère. Ces compositions présentent le double avantage d'une préparation simplifiée par rapport aux compositions classiques comprenant un système de vulcanisation et de propriétés hystérétiques améliorées.

Le caoutchouc naturel époxydé peut également être réticulé avec des amines, réaction qui peut être catalysée par du bisphénol A (Polym Int 56:694-698 (2007))
En revanche, ces documents n'adressent pas la problématique de l'adhésion aux éléments de renforcement.

Les documents WO 2017/081387 et WO 2017/081388 présentent une composition de caoutchouc et un composite à base d'une matrice polymère comportant un polymère diénique fonctionnel. Ce polymère diénique fonctionnel porte au moins un groupe aromatique substitué par au moins deux fonctions hydroxy vicinales. La réticulation de la composition de caoutchouc est réalisée par un système de vulcanisation ou à base d'un ou plusieurs composés peroxydes. De bonnes propriétés d'adhésion de la composition de caoutchouc au métal sont obtenues, mais nécessitent l'utilisation d'un polymère greffé.

Il est également connu de FR3043591 que l'addition de polyphénol à des compositions à base de NR et d'une charge et réticulées par un peroxyde permet d'atteindre des niveaux d'adhésion comparables à ceux de vulcanisats classiques.

Le document WO2019122587 quant à lui décrit une composition de caoutchouc à base d'au moins un élastomère comprenant des fonctions époxyde, une charge renforçante, un système de réticulation comprenant un polyacide carboxylique, un imidazole et au moins un composé phénolique spécifique. Des caractéristiques d'adhésions intéressantes de cette composition de caoutchouc à un élément de renfort ont été observées.

Poursuivant leurs recherches, les Inventeurs ont à présent trouvé que des compositions particulières réticulables pouvaient être préparées de manière simplifiée par rapport aux compositions de l'art antérieur, et que ces compositions pouvaient présenter des propriétés d'adhésion à un élément de renfort comprenant une surface métallique intéressantes, voire améliorées par rapport à des compositions de caoutchouc de l'art antérieur à base d'un élastomère époxydé dont le système de réticulation comprend un polyacide carboxylique. Ces compositions peuvent être utilisées de manière avantageuse pour fabriquer des composites à base d'au moins un élément de renfort comprenant une surface métallique.

### Description détaillée de l'invention

L'invention, décrite plus en détails ci-après, a pour objet un composite à base d'au moins un élément de renfort comprenant une surface métallique et d'une composition de caoutchouc à base d'au moins
a. un élastomère diénique époxydé,
b. une charge renforçante, et
c. un système de réticulation de l'élastomère diénique époxydé comprenant au moins :
   - un composé polyacide choisi parmi les composés organo polyphosphorés de formule générale (I) et les polyacides sulfoniques de formule générale (II), et
   - un composé polyphénol comprenant au moins deux fonctions hydroxyles -OH sur un même cycle aromatique. 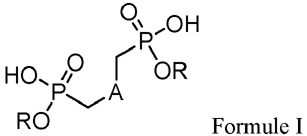 dans laquelle
      - A représente une liaison covalente ou un groupement hydrocarboné comportant au moins 1 atome de carbone, éventuellement substitué et éventuellement interrompu par un ou plusieurs hétéroatomes, et
      - les R représentent, indépendamment l'un de l'autre, un groupement hydrocarboné comportant au moins 1 atome de carbone ou un atome d'hydrogène ; 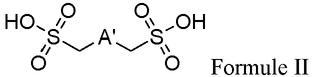
      dans laquelle
      - A' représente une liaison covalente ou un groupement hydrocarboné comportant au moins 1 atome de carbone, éventuellement substitué et éventuellement interrompu par un ou plusieurs hétéroatomes.

### Définitions

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé "majoritaire"», on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention; et dans un système comprenant deux polymères, le polymère majoritaire représente plus de la moitié de la masse des polymères.

Au contraire, un composé "minoritaire" est un composé qui ne représente pas la fraction massique la plus grande parmi les composés du même type.Lorsqu'on fait référence à une fonction (ou radical) "phosphonique", on entend au sens de la présente invention, la fonction "acide phosphonique" et la fonction "hémiester d'acide phosphonique".

Par fonction "acide phosphonique", on entend au sens de la présente invention une fonction qui répond à la formule 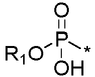 R1= H et -* représentant la liaison vers le reste de la molécule portant la fonction phosphonique.

Par fonction "hemiester d'acide phosphonique", on entend au sens de la présente invention, une fonction qui répond à la formule 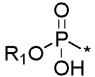 R1= alkyle et -* représentant la liaison vers le reste de la molécule portant la fonction phosphonique.

Lorsqu'on fait référence à la fonction (ou radical) sulfonique, on entend au sens de la présente invention, la fonction "acide sulfonique" de formule 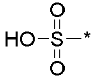 -* représentant la liaison vers le reste de la molécule portant la fonction phosphonique
Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Composite de l'invention

L'invention concerne un composite à base d'au moins
- un élément de renfort comprenant une surface métallique et
- une composition de caoutchouc à base d'au moins
   d. un élastomère diénique époxydé,
   e. une charge renforçante, et
   f. un système de réticulation de l'élastomère diénique époxydé comprenant au moins :
      - un composé polyacide choisi parmi les composés organo polyphosphorés de formule générale (I) et les polyacides sulfoniques de formule générale (II), et
      - un composé polyphénol comprenant au moins deux fonctions hydroxyles -OH sur un même cycle aromatique, 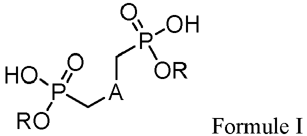 dans laquelle
         - A représente une liaison covalente ou un groupement hydrocarboné comportant au moins 1 atome de carbone, éventuellement substitué et éventuellement interrompu par un ou plusieurs hétéroatomes, et
         - les R représentent, indépendamment l'un de l'autre, un groupement hydrocarboné comportant au moins 1 atome de carbone ou un atome d'hydrogène ; 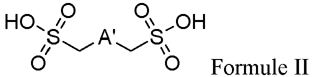 dans laquelle
            - A' représente une liaison covalente ou un groupement hydrocarboné comportant au moins 1 atome de carbone, éventuellement substitué et éventuellement interrompu par un ou plusieurs hétéroatomes.

Par l'expression composite "à base au moins d'un élément de renfort et d'une composition selon l'invention", il faut entendre un composite comprenant l'élément de renfort et ladite composition, la composition ayant pu réagir avec la surface de l'élément de renfort lors des différentes phases de fabrication du composite, en particulier au cours de la réticulation de la composition ou au cours de la confection du composite avant réticulation de la composition.

Ledit élément de renfort est un élément filaire. Il peut être tout ou partie métallique. Par élément filaire, on entend un élément présentant une longueur au moins 10 fois plus grande que la plus grande dimension de sa section, quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

En particulier, ledit élément de renfort peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Dans cet arrangement particulier, ledit élément de renfort comprend une surface métallique.

La surface métallique de l'élément de renfort constitue au moins une partie, et préférentiellement la totalité de la surface dudit élément et est destinée à entrer directement au contact de la composition selon l'invention. De préférence, l'élément de renfort est métallique, c'est-à-dire constitué d'un matériau métallique.

La composition selon l'invention enrobe au moins une partie de l'élément de renfort, préférentiellement la totalité dudit élément.

Selon une première variante de l'invention, la surface métallique de l'élément de renfort est faite d'un matériau différent du restant de l'élément de renfort. Autrement dit, l'élément de renfort est fait d'un matériau qui est au moins en partie, préférentiellement totalement, recouvert par une couche métallique qui constitue la surface métallique. Le matériau au moins en partie, préférentiellement totalement, recouvert par la surface métallique est de nature métallique ou non métallique, de préférence métallique.

Selon une deuxième variante de l'invention, l'élément de renfort est fait d'un même matériau, auquel cas l'élément de renfort est fait d'un métal qui est identique au métal de la surface métallique.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, la surface métallique comprend un métal choisi dans le groupe constitué par le fer, le cuivre, l'étain, le zinc et un alliage comportant au moins un de ces métaux. De manière plus préférentielle, la surface métallique comprend un métal choisi dans le groupe constitué par l'acier, le laiton (alliage Cu-Zn), le zinc et le bronze (alliage Cu-Sn), et de manière encore plus préférée dans le groupe constitué par le laiton et l'acier. De manière très préférée, la surface métallique est en laiton.

Certains métaux étant sujets à l'oxydation au contact de l'air ambiant, le métal peut être en partie oxydé.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

### Composition de caoutchouc de l'invention

La composition de caoutchouc selon l'invention contient au moins
a - une matrice élastomère comprenant au moins un élastomère diénique comprenant des fonctions époxydes,
b - une charge renforçante, et
c - un système de réticulation dudit polymère époxydé comprenant au moins
   - un composé polyacide choisi parmi les composés organo polyphosphorés de formule générale (I) et les polyacides sulfoniques de formule générale (II), et
   - un composé polyphénol comprenant au moins deux fonctions hydroxyles -OH sur un même cycle aromatique. 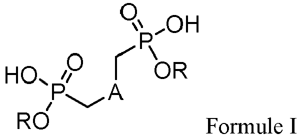 dans laquelle
      - A représente une liaison covalente ou un groupement hydrocarboné comportant au moins 1 atome de carbone, éventuellement substitué et éventuellement interrompu par un ou plusieurs hétéroatomes, et
      - les R représentent, indépendamment l'un de l'autre, un groupement hydrocarboné comportant au moins 1 atome de carbone ou un atome d'hydrogène ; 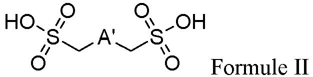 dans laquelle
         - A' représente une liaison covalente ou un groupement hydrocarboné comportant au moins 1 atome de carbone, éventuellement substitué et éventuellement interrompu par un ou plusieurs hétéroatomes.

### Elastomère diénique comprenant des fonctions époxydes (ou élastomère époxydé)

Par élastomère ou caoutchouc (les deux termes étant de manière connue synonymes et interchangeables) diénique comprenant des fonctions époxydes ou époxydé, on rappelle que doit être entendu au sens large un élastomère synthétique ou naturel, lequel est fonctionnalisé, c'est-à-dire qu'il est porteur de groupes fonctionnels époxydes, que ceux-ci soient pendants le long de la chaîne élastomère ou dans la chaîne élastomère, y compris les extrémités de chaîne.

On préfère utiliser au moins un élastomère diénique, dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

De tels élastomères diéniques époxydés et leurs procédés d'obtention sont bien connus de l'homme du métier et disponibles commercialement. Des élastomères diéniques porteurs de groupes époxydes ont été décrits par exemple dans EP 0763564 A1 ou EP 1403287 A1.

Les caoutchoucs naturels époxydés (en abrégé "ENR"), par exemple, peuvent être obtenus de manière connue par époxydation du caoutchouc naturel, par exemple par des procédés à base de chlorohydrine ou de bromohydrine ou des procédés à base de peroxydes d'hydrogène, d'alkyl hydroperoxydes ou de peracides (tel que acide peracétique ou acide performique) ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Cray Valley sous la dénomination "Poly Bd" (par exemple "Poly Bd 605E"). Les SBR époxydés peuvent être préparés par des techniques d'époxydation bien connues de l'homme du métier.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés, les copolymères de butadiène-styrène (SBR) époxydés et les mélanges de ces élastomères. De préférence encore, l'élastomère diénique époxydé est choisi dans le groupe constitué par les polymères du butadiène époxydés et leurs mélanges, particulièrement l'élastomère diénique époxydé est un copolymère styrène-butadiène époxydé (SBR).

Le taux (% molaire) d'époxydation des élastomères diéniques époxydés précédemment décrits peut varier dans une large part selon les modes de réalisation particuliers de l'invention, de préférence d'au moins 0,2%, plus préférentiellement d'au moins 2%, et de préférence d'au plus 60%, plus préférentiellement d'au plus 50%, encore plus préférentiellement d'au plus 30%. Quand le taux d'époxydation est inférieur à 0,2%, l'effet technique visé risque d'être insuffisant. Ainsi selon un mode de réalisation, le taux d'époxydation, est plus préférentiellement compris dans un domaine de 2% à 30%.

Les compositions de caoutchouc de l'invention peuvent contenir un seul élastomère diénique époxydé ou un mélange de plusieurs élastomères diéniques époxydés (qu'on notera alors au singulier comme étant « l'élastomère diénique époxydé » pour représenter la somme des élastomères époxydés de la composition).

De manière préférentielle, la composition de caoutchouc de l'invention est dépourvue d'élastomère diénique non époxydé. Dit autrement, l'élastomère diénique époxydé, au sens large de la somme des élastomères diéniques époxydés, est préférentiellement le seul élastomère diénique dans la composition de caoutchouc de l'invention.

### Charge renforçante

On peut utiliser tout type de charge renforçante connue pour ses capacités à renforcer une composition de caoutchouc utilisable pour la fabrication de pneus, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneus (noirs dits de grade pneu). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 180 pce, plus préférentiellement entre 30 et 150 pce, l'optimum étant de manière connue différent selon les applications particulières visées : le niveau de renforcement attendu sur un pneu vélo, par exemple, est bien sûr inférieur à celui exigé sur un pneu apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant majoritairement du noir de carbone à titre de charge renforçante. Plus préférentiellement selon ce mode de réalisation, la charge renforçante est exclusivement constituée de noir de carbone.

Les compositions de caoutchouc selon l'invention peuvent contenir des agents de couplage pour coupler la charge inorganique renforçante à l'élastomère diénique, lorsqu'une charge inorganique est utilisée. On peut utiliser de manière connue un agent au moins bifonctionnel destiné à assurer une connexion suffisante, de nature chimique et/ou physique, entre la charge inorganique (surface de ses particules) et l'élastomère diénique, par exemple des organosilanes ou des polyorganosiloxanes bifonctionnels.

Dans les compositions de caoutchouc conformes à l'invention, la teneur en agent de couplage est inférieure à 20 pce. Typiquement le taux d'agent de couplage représente de 0,5% à 15% en poids par rapport à la quantité de charge inorganique. Dans les compositions de caoutchouc conformes à l'invention, la teneur en agent de couplage est préférentiellement comprise entre 3 et 12 pce.

Les compositions de caoutchouc peuvent également contenir des agents de recouvrement de la charge inorganique lorsqu'une charge inorganique est utilisée. Ces agents de recouvrement sont bien connus (voir par exemple les demandes de brevet WO 2006/125533, WO 2007/017060, WO 2007/003408, WO 2009/062733 et EP 0 784 072). On citera par exemple des hydroxysilanes ou des silanes hydrolysables tels que des hydroxysilanes, des alkylalkoxysilanes, notamment des alkyltriéthoxysilanes comme par exemple le 1-octyl-tri-éthoxysilane.

Dans les compositions de caoutchouc conformes à l'invention, la teneur en agent de recouvrement est inférieure à 20 pce. Typiquement le taux d'agent de recouvrement représente de 0,5% à 15% en poids par rapport à la quantité de charge inorganique. Dans les compositions de caoutchouc conformes à l'invention, la teneur en agent de recouvrement est préférentiellement comprise entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent pour faciliter la dispersion de la charge dans la composition de caoutchouc.

### Système de réticulation

Le système de réticulation selon l'invention comprend au moins un composé polyacide choisi parmi les composés organo polyphosphorés de formule générale (I) et les polyacides sulfoniques de formule générale (II). Par « comprend au moins un », il faut comprendre « comprend un ou plusieurs» ; lorsqu'il s'agit de « plusieurs », les composés peuvent constituer un mélange de composés organo polyphosphorés de formule générale (I), un mélange de polyacides sulfoniques de formule générale (II) ou un mélange d'au moins un composé organo polyphosphoré de formule générale (I) et d'au moins un polyacide sulfonique de formule générale (II).

Le composé organo polyphosphoré utile pour les besoins de l'invention est un composé organo polyphosphoré de formule générale (I) 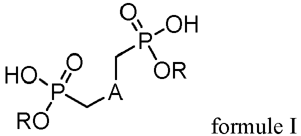 dans laquelle
- A représente une liaison covalente ou **un** groupement hydrocarboné comportant au moins 1 atome de carbone, éventuellement substitué et éventuellement interrompu par **un** ou plusieurs hétéroatomes, et
- les R représentent, indépendamment l'un de l'autre, un atome d'hydrogène ou un groupement alkyle comportant au moins 1 atome de carbone.

Préférentiellement, dans la formule générale (I) telle que définie ci-dessus A représente une liaison covalente ou un groupement divalent hydrocarboné comportant au moins 1, de préférence au moins 2, plus préférentiellement au moins 4 atomes de carbone. Préférentiellement également lorsque A représente un groupement divalent hydrocarboné, A représente un groupement divalent hydrocarboné comportant au plus 1800 atomes de carbone, de préférence au plus 100 atomes de carbone, plus préférentiellement au plus 65 atomes de carbone, plus préférentiellement encore au plus 30 atomes de carbones. Ainsi selon des réalisations préférentielles, A représente une liaison covalente ou un groupement divalent hydrocarboné comportant de 4 à 65 atomes de carbone, de préférence de 4 à 30 atomes de carbone.

Préférentiellement également, dans le composé de formule générale (I), A est un groupement hydrocarboné divalent aliphatique ou un groupement hydrocarboné divalent aromatique, ou un groupement divalent comportant au moins une partie aliphatique et une partie aromatique.

Dans le composé de formule générale (I), A peut être interrompu par au moins un hétéroatome choisi parmi l'oxygène, l'azote et le soufre, de préférence l'oxygène.

Egalement dans le composé de formule générale (I), A peut être substitué par exemple par au moins un radical choisi parmi les radicaux hydroxyle, alkyle, cycloalkyle, aryle, aralkyle, alkoxy. Egalement dans le composé de formule générale (I), A peut être substitué par une fonction phosphonique.

Selon un mode de réalisation préférentiel, A ne comporte pas d'autre fonction phosphonique et le composé organo polyphosphoré est alors un composé organo biphosphoré. Le polyacide est alors un diacide.

Selon un autre mode de réalisation préférentiel, dans le composé de formule générale (I), A est un groupement divalent aliphatique ou un groupement divalent aromatique ou un groupement divalent comportant au moins une partie aliphatique et une partie aromatique, lequel groupement est ou non interrompu par au moins un atome d'oxygène. Plus préférentiellement alors le composé de formule générale (I) ne comporte pas d'autre fonction phosphonique.

Selon un mode de réalisation particulier, dans le composé de formule générale (I), A est un groupement hydrocarboné divalent aromatique, ou un groupement divalent comportant au moins une partie aliphatique et une partie aromatique. De préférence alors, le groupement hydrocarboné divalent aromatique ou la partie aromatique du groupement divalent comportant au moins une partie aliphatique comporte au moins 6 atomes de carbone et au plus 18 atomes de carbone, de préférence 6 atomes de carbone. De préférence encore, A ne comporte pas d'autre fonction phosphonique. Plus préférentiellement encore, A est un groupement aromatique divalent non substitué comprenant 6 atomes de carbone.

Préférentiellement, dans le composé de formule générale (I), les R représentent, indépendamment l'un de l'autre, un atome d'hydrogène ou un groupement alkyle ayant de 1 à 20 atomes de carbone, de préférence de 1 à 12 atomes de carbone, ou un groupement cycloalkyle ayant de 5 à 24 atomes de carbone, ou encore un groupement aryle ayant de 6 à 30 atomes de carbone ou un groupement aralkyle ayant de 7 à 25 atomes de carbone. Préférentiellement, les R représentent un groupement alkyle ayant de 1 à 12 atomes de carbone, plus préférentiellement encore ayant de 1 à 4 atomes de carbone.

De préférence également, les R sont identiques.

Plus préférentiellement, les R représentent un groupement alkyle ayant de 1 à 12 atomes de carbone, préférentiellement encore ayant de 1 à 4 atomes de carbone. Plus préférentiellement encore, les R sont identiques et représentent un groupement alkyle ayant de 1 à 12 atomes de carbone, préférentiellement encore ayant de 1 à 4 atomes de carbone.

Selon un mode de réalisation très particulier, dans le composé de formule générale (I), A est un groupement divalent de type aromatique non substitué ne comportant pas d'autre fonction phosphonique de préférence comportant de 6 à 12 atomes de carbone, de préférence 6, et les R sont identiques et représentent un groupement alkyle ayant de 1 à 4 atomes de carbone.

Le composé polyacide sulfonique utile pour les besoins de l'invention est un composé polyacide sulfonique de formule générale (II) : 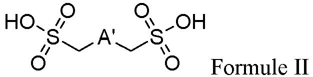 dans laquelle
- A' représente une liaison covalente ou un groupement hydrocarboné comportant au moins 1 atome de carbone, éventuellement substitué et éventuellement interrompu par un ou plusieurs hétéroatomes.

Préférentiellement, A' représente une liaison covalente ou un groupement divalent hydrocarboné comportant au moins 1, de préférence au moins 2, plus préférentiellement au moins 4 atomes de carbone. Préférentiellement également lorsque A' représente un groupement divalent hydrocarboné, A' représente un groupement divalent hydrocarboné comportant au plus 1800 atomes de carbone, de préférence au plus 100 atomes de carbone, plus préférentiellement au plus 65 atomes de carbone, plus préférentiellement encore au plus 30 atomes de carbones. De manière encore plus préférentielle, A' représente une liaison covalente ou un groupement divalent hydrocarboné comportant de 1 à 65 atomes de carbone, de préférence de 1 à 30 atomes de carbone.

Préférentiellement également, dans le composé de formule générale (II), lorsque A' représente un groupement divalent hydrocarboné, A' est un groupement hydrocarboné divalent aliphatique ou un groupement hydrocarboné divalent aromatique, ou un groupement divalent comportant au moins une partie aliphatique et une partie aromatique. Dans le composé de formule générale (II), lorsque A' représente un groupement divalent hydrocarboné, A' peut être interrompu par au moins un hétéroatome choisi parmi l'oxygène, l'azote et le soufre.

Egalement dans le composé de formule générale (II), lorsque A' représente un groupement divalent hydrocarboné, A' peut être substitué par au moins un radical choisi parmi les radicaux hydroxyle, alkyle, cycloalkyle, aryle, aralkyle et alkoxy. Egalement dans le composé de formule générale (II), A' peut être substitué par une fonction sulfonique.

Selon un mode de réalisation préférentiel, A' ne comporte pas d'autre fonction sulfonique. Le composé polyacide sulfonique est alors un composé diacide sulfonique.

Selon un mode de réalisation de l'invention, A' est une liaison covalente.

Dans la présente description les radicaux alkyles ont de 1 à 15, préférentiellement de 1 à 10, très préférentiellement de 1 à 4 atomes de carbone. Dans la présente description les radicaux aryles ont de 6 à 18, préférentiellement de 6 à 14 atomes de carbone.

Les composés organo polyphosphoré utiles pour les besoins de l'invention sont soit disponibles dans le commerce, soit facilement préparés par l'homme de l'art selon des techniques bien connues telles que les voies chimiques décrites par exemple dans le document Yufeng Li et al., Molecules 2015, 20, 14435-14450; doi:10.3390/molecules200814435.

Par exemple, à titre de composés organo polyphosphorés utiles pour les besoins de l'invention, on peut citer l'acide phosphonique [1,4-phénylenebis(methylene)]bis-P,P'-diethylester (N° CAS 4546-05-8), l'acide phosphonique [1,1'-oxybisethyl]bis-P,P'-dihexylester (N° CAS 856638-06-7), l'acide phosphonique [1,12 dodécanediyl]bis-P,P'-diethylester (N° CAS 1229230-54-9) ;

Par exemple, à titre de composé organo polyphosphoré disponibles dans le commerce et utiles aux besoins de l'invention, on peut citer : l'acide xylylènebiphophonique de la société ABCR, l'acide méthylènebiphosphonique.

Par exemple, à titre de composés polyacides sulfoniques utiles pour les besoins de l'invention, on peut citer l'acide 1,2-Ethylenedisulfonique (N° CAS 110-04-3), l'acide 1,3-Propanedisulfonique (21668-77-9)

Par exemple, à titre de composé polyacide sulfonique disponibles dans le commerce et utiles aux besoins de l'invention, on peut citer : l'acide 1,2-Ethylenedisulfonique, l'acide Butane-1,4-disulfonique (N° 1588441-14-8), l'acide 1,3-Propanedisulfonique de la société ABCR.

L'homme du métier comprendra que pour la simplification de la formulation des compositions de caoutchouc entrant dans la fabrication des composite, ainsi que l'amélioration des propriétés d'adhésion de ces compositions sur des renforts, ce qui importe le plus dans le polyacide est la nature de sa fonction acide et non celle du groupement espaceur A ou A' qui relie les fonctions entre elles.

Le système de réticulation selon l'invention contient également, à titre de composé essentiel à l'invention, un composé polyphénol comprenant au moins un cycle aromatique comprenant 6 atomes de carbones et au moins deux fonctions hydroxyles -OH sur un même cycle aromatique.

Selon un mode de réalisation de l'invention, le composé polyphénol comprend un cycle aromatique comprenant 6 atomes de carbone et au moins deux fonctions hydroxyles -OH sur le cycle aromatique et répond à la formule générale (III) 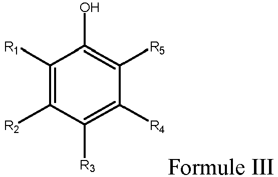
dans laquelle au moins les groupements R₁, R₂, R₃, R₄ et R₅, indépendamment les uns des autres, désignent des groupements choisis parmi l'atome d'hydrogène, les radicaux hydroxyle, thiol, hydroxyalkényle, carboxyle, hydrogénocarbonyle, alkyle, carboxylalkyle,
carboxylalkényle, carbonylalkyle, alkoxy, alkylthioxy, aryle, aryloxy, arylthioxy, arylcarbonyle, amino, aminoalkyle, éthers, esters, thioesters, sous réserve que l'un au moins de R₁, R₂, R₃, R₄ et R₅désigne un radical hydroxyle.

Par groupe éther, on entend un groupe de formule -(CₙH₂ₙ₋₂)- O-alkyle. Par groupe esther, on entend un groupe de formule -(CₙH₂ₙ)-CO-O-alkyle, Par groupe thioester, on entend un groupe de formule - (CₙH₂ₙ)-CO-S-alkyle. n est tel que définit plus haut.

Par groupe carboxyle, ou fonction acide carboxylique, on entend un groupe de formule -COOH dans lequel l'atome de carbone est lié par une double liaison à un atome d'oxygène et par une liaison simple à un groupe hydroxyle -OH.

Par groupe alkyle, on entend un groupe de formule -CₙH₂ₙ₊₁.

Par groupe hydrogénocarbonyle, on entend un groupe de formule -CHO dans lequel l'atome de carbone est lié par une double liaison à un atome d'oxygène et par une liaison simple à un atome d'hydrogène.

Par groupe carboxyalkényle, on entend un groupe de formule -(CₙH₂ₙ)-COOH. Par groupe carbonylalkyle, on entend un groupe de formule -(CₙH₂ₙ)-CHO. Par groupe hydroxyalkényle, on entend un groupe de formule -CₙH₂ₙ(OH).

Par groupe aryloxy, on entend un groupe de formule générale -O-Aryle, dans lequel un groupe aryle est lié à un atome d'oxygène. Par groupe arylthioxy, on entend un groupe de formule générale -S-Aryle, dans lequel un groupe aryle est lié à un atome de soufre. Par groupe arylcarbonyle, on entend un groupe de formule générale -CO-Aryle, dans lequel un groupe aryle est lié à un groupe carbonyle.

Par groupe amino, on entend un groupe de formule -NH₂.

Par radical aminoalkyle, on entend un radical de formule -CₙH₂ₙ-NH₂.

Par groupe ether, on entend un groupe de formule -(CₙH₂ₙ₋₂)ₓ- O-alkyle. Par groupe ester, on entend un groupe de formule -(CₙH₂ₙ)ₓ-CO-O-alkyle. Par groupe thioester, on entend un groupe de formule - (CₙH₂ₙ)ₓ-CO-S-alkyle. Dans ces définitions, x vaut 0 ou 1.

Dans les définitions précédentes, n est un entier, avantageusement compris entre 1 et 10, préférentiellement entre 1 et 6, très préférentiellement entre 1 et 4.

Selon ce mode de réalisation de l'invention, le composé polyphénol répond de préférence à la formule (III) dans laquelle R₁, R₂, R₃, R₄ et R₅, indépendamment les uns des autres, désignent des groupements choisis parmi l'atome d'hydrogène, les radicaux hydroxyle, carboxyle, ester. Plus préférentiellement encore, un ou deux de R₁, R₂, R₃, R₄ et R₅ désigne un radical hydroxyle et un autre de R₁, R₂, R₃, R₄ et R₅ désigne un radical carboxyle ou ester, les autres désignant un atome d'hydrogène.

Dans les définitions précédentes, on entend par aryle un substituant aromatique comprenant de 6 à 14 atomes de carbone, de préférence 6 à 10 atomes de carbone, de préférence 6atomes de carbone.

Selon ce mode de réalisation de l'invention, le composé polyphénol comprend de préférence 2 ou 3 fonctions hydroxyle -OH sur le cycle aromatique.

Parmi les composés polyphénols à un cycle aromatique utiles pour les besoins de l'invention, on peut citer l'acide gallique, le pyrogallol, le méthyl 3,4,5-trihydroxybenzoate, l'acide 3,4-dihydroxy benzoique, le phloroglucinol. De manière très préférée le composé polyphénol est l'acide gallique.

Selon un autre mode de réalisation de l'invention, le composé polyphénol est un composé comprenant au moins deux et de préférence au moins trois cycles aromatiques comprenant chacun 6 atomes de carbone, chaque cycle comprenant au moins 2 fonctions hydroxyles -OH.

La masse molaire du composé polyphénol est préférentiellement supérieure à 600 g/mol, préférentiellement supérieure à 800 g/mol, de manière préférée supérieure à 1000 g/mol et de manière très préférée supérieure à 1200 g/mol.

De manière préférée, le composé polyphénol est choisi parmi les gallotannins, c'est-à-dire des esters d'acide gallique et de polyol, le polyol étant de préférence choisi parmi les pentoses et les hexoses. De préférence, le composé polyphénol est choisi parmi les esters de glucose et d'acide gallique, de manière préférée choisi parmi les polygalloyl glucoses comprenant de 3 à 10 unités galloyles, de préférence comprenant de 5 à 10 unités galloyles. De manière préférée, le composé polyphénol est choisi parmi les trigalloyl glucoses, les pentagalloyl glucoses et les décagalloyl glucoses, et de préférence parmi le 1,2,6-Trigalloyl glucose, le 1,3,6-Trigalloyl glucose, le 1,2,3,4,6-Pentagalloylglucose et l'acide tannique (ou beta-D-5 Glucose pentakis(3,4-dihydroxy-5-((3,4,5-trihydroxybenzoyl)oxy)benzoate)). De manière très préférée le composé polyphénol est l'acide tannique.

Ces composés polyphénol utiles pour les besoins de l'invention sont disponibles dans le commerce. Par exemple, à titre de composés polyphénol disponibles dans le commerce et utiles aux besoins de l'invention, on peut citer ces mêmes composés commercialisés par la société Sigma-Aldrich.

Selon un mode de réalisation de l'invention, le système de réticulation selon l'invention peut contenir un imidazole. Un tel composé est connu de l'homme de l'art et notamment décrit dans les documents WO2014095582, WO2014095583, WO2014095585 et WO2014095586.

Selon ce mode de réalisation de l'invention, le taux d'imidazole est préférentiellement compris dans un domaine allant de 0,01 à 4 équivalents molaires, et de préférence de 0,01 à 3 équivalents molaires, par rapport aux fonctions acides présentes sur les composés polyacides de formules générales (I) et (II).

Les imidazoles utiles pour les besoins de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

Un système de réticulation comprenant au moins un composé polyacide, choisi parmi ceux de formule générale (I) et ceux de formule (II), et un imidazole pourrait être un système de réticulation dans lequel ledit composé polyacide et ledit imidazole auraient préalablement réagi ensemble avant leur introduction dans la composition.

Selon un mode de réalisation de l'invention, lorsque la charge renforçante contient majoritairement une charge inorganique renforçante, telle que la silice, ou lorsque la charge renforçante est constituée d'une telle charge inorganique renforçante, alors, le composé polyphénol du système de réticulation est avantageusement un composé comprenant au moins deux et de préférence au moins trois cycles aromatiques comprenant chacun 6 atomes de carbone, chaque cycle comprenant au moins 2 fonctions hydroxyles -OH, tel que défini plus haut. Selon ce mode de réalisation, le composé polyphénol est de préférence l'acide tannique.

Le taux de composé polyacide dans la composition de caoutchouc selon l'invention est préférentiellement d'au moins 0,2 et d'au plus 20 pce, de préférence compris dans un domaine allant de 0,2 à 10 pce. En dessous de 0,2 pce de composé polyacide, l'effet de la réticulation n'est pas sensible, tandis qu'au-delà de 20 pce de composé polyacide, les propriétés limites de la composition sont pénalisées.

Le taux de composé polyphénol est préférentiellement d'au moins 0,2 pce, de préférence d'au moins 0,5 pce, et d'au plus 50 pce, de préférence d'au plus 25 pce. En dessous de 0,2 pce de composé polyphénol, il n'y aurait pas d'effet sur la réticulation ou l'adhésion tandis qu'au-delà de 20 pce de composé polyphénol des réactions parasites pourraient avoir lieu. Le taux de polyphénol est plus particulièrement compris dans un domaine allant de 0,2 à 50, de préférence de 0.5 à 25 pce.

### Additifs divers

Les compositions de caoutchouc conformes à l'invention peuvent également comporter tout ou partie des additifs usuels, connus de l'homme de l'art et habituellement utilisés dans les compositions de caoutchouc pour pneus, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

De préférence, la composition de caoutchouc selon l'invention est dépourvue de système de vulcanisation, ou en contient moins de 1 pce, de préférence moins de 0,5 pce et plus préférentiellement moins de 0,2 pce. Ainsi, la composition de caoutchouc selon l'invention, est préférentiellement dépourvue de soufre moléculaire ou en contient moins de 1 pce, de préférence moins de 0,5 pce et plus préférentiellement moins de 0,2 pce. De même la composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce. En particulier, la composition de caoutchouc selon l'invention est préférentiellement dépourvue de zinc ou d'oxyde de zinc, ou en contient moins de 1 pce, de préférence moins de 0,5 pce et de manière très préférée moins de 0,2 pce. En particulier également, la composition de caoutchouc selon l'invention est préférentiellement dépourvue d'acide stéarique, ou en contient moins de 1 pce, de préférence moins de 0,5 pce et de manière très préférée moins de 0,2 pce

De même la composition de caoutchouc selon l'invention est préférentiellement dépourvue de sels de cobalt, tels qu'ils sont connus de l'homme du métier, et dont l'effet connu de l'homme du métier est une meilleure pérennité de l'adhésion, ou en contient moins de 1 pce, de préférence moins de 0,5 pce, plus préférentiellement moins de 0,2 pce et très préférentiellement moins de 0,1 pce.

Ainsi, de manière surprenante, une très bonne adhésion de la composition selon l'invention sur des câbles de renforcement est obtenue sans qu'il soit besoin d'utiliser du soufre et des sels de cobalt.

### Préparation des compositions de caoutchouc

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers. La première phase est réalisée à haute température, jusqu'à une température maximale comprise entre 110°C et 190°C, de préférence entre 130°C et 180°C, pendant une durée généralement comprise entre 2 et 10 minutes.
- une seconde phase de travail mécanique, qui est réalisée dans un mélangeur externe tel qu'un mélangeur à cylindres, après refroidissement du mélange obtenu au cours de la première phase jusqu'à une plus basse température, typiquement inférieure à 110°C, par exemple entre 40°C et 100°C. On incorpore alors le système de réticulation, et le tout est alors mélangé pendant quelques minutes, par exemple entre 2 et 15 min.

La composition finale ainsi obtenue peut ensuite être calandrée ou extrudée, par exemple sous la forme d'une feuille, d'une plaque notamment pour une caractérisation au laboratoire ou encore pour la fabrication du composite selon l'invention.

### Préparation des composites selon l'invention

Le composite conforme à l'invention peut être à l'état cru (avant réticulation de la composition de caoutchouc) ou à l'état cuit (après réticulation de la composition de caoutchouc). Le composite est cuit après mise en contact du ou des éléments de renfort avec la composition de caoutchouc selon l'invention.

Le composite peut être fabriqué par un procédé qui comprend les étapes suivantes :
- Réaliser deux couches de la composition selon l'invention,
- Prendre le ou les éléments de renfort en sandwich dans les deux couches en le(s) déposant entre les deux couches,
- Le cas échéant cuire le composite.

Alternativement, le composite peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage ou par extrusion de profilé. Au cours de la cuisson du composite, la composition de caoutchouc est réticulée.

Lorsque le composite est destiné à être utilisé dans un pneu, la cuisson du composite a lieu généralement lors de la cuisson de l'enveloppe du pneu.

### Article fini ou semi-fini et pneu

L'invention a également pour objet un article fini ou semi-fini comprenant un composite selon l'invention. Les propriétés d'adhésion améliorées autorisent des applications dans des domaines divers et variés nécessitant de tels article finis ou semi-finis. Les composites selon l'invention peuvent ainsi entrer dans la fabrication de produits finis tels que les tuyaux, les courroies, les pneus, les bandes transporteuses...

Le pneu, autre objet de l'invention, a pour caractéristique essentielle de comprendre le composite conforme à l'invention. Le pneu peut être à l'état cru (avant réticulation de la composition de caoutchouc) ou à l'état cuit (après réticulation de la composition de caoutchouc). Généralement, au cours de la fabrication du pneu, le composite est déposé à l'état cru (c'est-à-dire avant réticulation de la composition de caoutchouc) dans la structure du pneu avant l'étape de cuisson du pneu.

### Exemples

### Méthodes de mesures

### - Essais de traction

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement et à 100% d'allongement, respectivement notés MA₁₀ et MA₁₀₀. Toutes ces mesures sont réalisées sur éprouvettes cuites (ou réticulées).

Les résultats sont exprimés en base 100, la valeur 100 étant attribuée au témoin. Un résultat supérieur à 100, indique que la composition de l'exemple considéré présente une plus forte rigidité que le témoin.

### Préparation des compositions de caoutchouc

On procède pour préparer les différentes compositions de caoutchouc, de la manière suivante : on introduit dans un mélangeur interne (taux de remplissage final : environ 70% en volume), dont la température initiale de cuve est d'environ 60°C, successivement le polymère époxydé puis tous les autres constituants du mélange en dehors du système de réticulation. On conduit alors un travail thermomécanique en une étape jusqu'à atteindre une température maximale de « tombée » de 150°C. On récupère le mélange ainsi obtenu, on incorpore le système de réticulation et on le refroidit sur un mélangeur externe (homo-finisseur) à 30°C, en mélangeant le tout.

Les compositions préparées sont présentées dans la table 1.

### Préparation des éprouvettes de composite

Les compositions de caoutchouc ainsi préparées sont utilisées pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. Lors de la confection du bloc, des renforts métalliques sont emprisonnés entre les deux plaques à l'état cru, à égale distance et en laissant dépasser de part et d'autre de ces plaques une extrémité du renfort métallique de longueur suffisante pour la traction ultérieure. Le bloc comportant les renforts métalliques est alors placé dans un moule adapté aux conditions de tests visées et laissées à l'initiative de l'homme de l'art ; à titre d'exemple, dans le cas présent, la cuisson du bloc est réalisée à 170°C pendant un temps variant de 50 min à 100 min selon la composition sous une pression de 5.5 tonnes.

Chaque renfort métallique est constitué de 2 fils d'acier à 0,7% de carbone, de 30/100è millimètres de diamètre retordus ensemble, le revêtement en laiton comprend 63% de cuivre.

### Test d'adhésion

À l'issue de la cuisson, l'éprouvette ainsi constituée du bloc réticulé et des renforts métalliques est mise en place dans les mâchoires d'une machine de traction adaptée pour permettre de tester chaque tronçon isolément, à une vitesse et une température données selon la méthode décrite dans la norme ASTM D 2229-02 (par exemple, dans le cas présent, à 100 mm/min et température ambiante).

On caractérise les niveaux d'adhésion en mesurant la force dite d'arrachement pour extraire les tronçons de l'éprouvette.

Les résultats sont exprimés en base 100 par rapport à une éprouvette témoin qui contient des renforts métalliques de nature identique à l'éprouvette testée et qui contient la composition de caoutchouc « T1 » présentée dans la Table 1.

Une valeur supérieure à celle de l'éprouvette témoin, arbitrairement fixée à 100, indique **un** résultat amélioré, c'est-à-dire une force d'arrachement supérieure à celle de l'éprouvette témoin.

L'éprouvette T1 comprend un système de réticulation à base d'un diacide carboxylique et **un** composé imidazole connu pour une composition de caoutchouc naturel époxydé.

Les compositions C1 C2 C3 C4, d'une part en mélange noir, et C5, d'autre part en mélange silice, sur lesquelles les tests d'adhésion ont été réalisés montrent de bonnes propriétés d'adhésion.

**Tableau 1**

| | **T1** | **C1** | **C2** | **C3** | **C4** | **T2** | **C5** |
|---|---|---|---|---|---|---|---|
| ENR (1) | 100 | 100 | 100 | 100 | 100 | 100 | 100 |
| Noir de Carbone (2) | 50 | 50 | 50 | 60 | 60 | | |
| Silice (3) | | | | | | 60 | 60 |
| Silane (4) | | | | | | 4.8 | 4.8 |
| 6PPD (5) | 1.5 | 1.5 | 1.5 | 1.5 | 1.5 | 1.5 | 1.5 |
| Hemiester bisphosphonique (6a) | | 2.1 | 2.1 | | | | |
| Diacide Sulfonique (6b) | | | | 1.24 | 1.24 | | 1.24 |
| Acide dodécanedioique (6c) | 1.5 | | | | | 1.5 | |
| Imidazole BMI (7) | 2.24 | | 2.24 | | 2.24 | 2.24 | |
| Acide Gallique (8) | 4,7 | 4,7 | 4,7 | 4,7 | 4,7 | | |
| Acide tannique (9) | | | | | | 2.65 | 2.65 |
| Force d'arrachement maximale | 100 | 105 | 159 | 102 | 137 | 100 | 135 |

Toutes les compositions sont données en pce ;
(1) Caoutchouc Naturel Epoxydé, « ENR-25 », de la société Guthrie Polymer
(2) N326
(3) Silice 160MP, « Zeosil 1165MP » de la société Rhodia
(4) « Dynasylan Octeo » de la société Degussa
(5) N-1,3-diméthylbutyl-N-phénylparaphénylènediamine (Santoflex 6-PPD de la société Flexsys)
(6) Polyacide
   a-Hemiester bisphosphonique 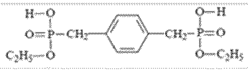
   M= 322.34 g/mol synthétisé selon le mode opératoire décrit dans Molecules 2015, 20, 14435-14450; doi:10.3390/molecules200814435;
   b-Polyacide sulfonique : acide 1.2-éthanedisulfonique dihydraté M=190.18 g/mol CAS 110-04-3 de la société ABCR,
   c-Acide dodecanedioique de la société Sigma-Aldrich, M= 230.3 g/mol,
(7) 1-benzyl-2-méthylimidazole, CAS = 13750-62-4, fourni par Sigma Aldrich
(8) Acide gallique CAS : 149-91-7 de la société Sigma-Aldrich
(9) Acide tannique CAS : 1401-55-4 de la société Sigma-Aldrich

## Revendications

1. Composite à base d'au moins un élément de renfort comprenant une surface métallique et d'une composition de caoutchouc à base d'au moins
a. un élastomère diénique époxydé,
b. une charge renforçante, et
c. un système de réticulation de l'élastomère diénique époxydé comprenant au moins :
- un composé polyacide choisi parmi les composés organo polyphosphorés de formule générale (I) et les polyacides sulfoniques de formule générale (II), et
- un composé polyphénol comprenant au moins un cycle aromatique comprenant 6 atomes de carbone et au moins deux fonctions hydroxyles -OH sur un même cycle aromatique. 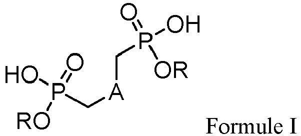 dans laquelle
- A représente une liaison covalente ou un groupement hydrocarboné comportant au moins 1 atome de carbone, éventuellement substitué et éventuellement interrompu par un ou plusieurs hétéroatomes, et
- les R représentent, indépendamment l'un de l'autre, un groupement hydrocarboné comportant au moins 1 atome de carbone ou un atome d'hydrogène ; 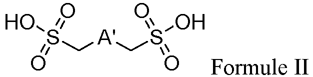 dans laquelle
- A' représente une liaison covalente ou un groupement hydrocarboné comportant au moins 1 atome de carbone, éventuellement substitué et éventuellement interrompu par un ou plusieurs hétéroatomes.

2. Composite selon la revendication précédente, **caractérisé en ce que** le métal de la surface métallique est le laiton ou l'acier.

3. Composite selon l'une quelconque des revendications précédentes, **caractérisé en ce que** un composé polyacide est un diacide.

4. Composite selon l'une quelconque des revendications précédentes, **caractérisé en ce que** le groupement hydrocarboné comportant au moins 1 atome de carbone, éventuellement substitué et éventuellement interrompu par un ou plusieurs hétéroatomes, entrant dans la définition de A ou de A', est un groupement divalent hydrocarboné comportant au moins 2 atomes de carbone, plus préférentiellement au moins 4 atomes de carbone, et au plus 100 atomes de carbone, de préférence au plus 65 atomes de carbone, plus préférentiellement au plus 30 atomes de carbone.

5. Composite selon l'une quelconque des revendications précédentes, **caractérisé en ce que** le système de réticulation de l'élastomère diénique époxydé comprend **un** composé imidazole.

6. Composite selon l'une quelconque des revendications précédentes, **caractérisé en ce que** les R sont identiques et représentent **un** groupement alkyle ayant de 1 à 12 atomes de carbone, de préférence de 1 à 4 atomes de carbones.

7. Composite selon l'une quelconque des revendications précédentes, **caractérisé en ce que** le composé polyphénol comprend **un** cycle aromatique de 6 atomes de carbone et au moins deux fonctions hydroxyles -OH sur **un** même cycle aromatique et répond à la formule générale (III) 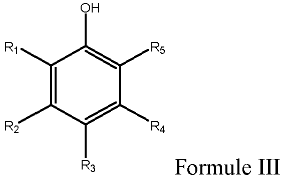 dans laquelle les groupements R₁, R₂, R₃, R₄ et R₅, indépendamment les uns des autres, désignent des groupements choisis parmi l'atome d'hydrogène, les radicaux hydroxyle, thiol, hydroxyalkényle, carboxyle, hydrogénocarbonyle, alkyle, carboxylalkyle, carboxylalkényle, carbonylalkyle, aryle, aryloxy, arylthioxy, arylcarbonyle, amino, aminoalkyle, éthers, esters, thioesters, sous réserve que l'un au moins de R₁, R₂, R₃, R₄ et R₅ désigne un radical hydroxyle.

8. Composite selon l'une quelconque des revendications 1 à 6, **caractérisé en ce que** le composé polyphénol est un composé comprenant au moins deux, de préférence au moins trois cycles aromatiques comprenant 6 atomes de carbone, chaque cycle comprenant au moins 2 fonctions hydroxyles -OH.

9. Composite selon la revendication précédente, dans laquelle le composé polyphénol est l'acide tannique.

10. Composite selon l'une quelconque des revendications précédentes, **caractérisé en ce que** la charge renforçante comporte majoritairement du noir de carbone.

11. Composite selon l'une quelconque des revendications 8 et 9, **caractérisé en ce que** la charge renforçante comporte majoritairement de la silice.

12. Composite selon l'une quelconque des revendications précédentes, **caractérisé en ce que** ladite composition est dépourvue de sels de cobalt ou en contient moins de 1 pce.

13. Composite selon l'une quelconque des revendications précédentes, **caractérisé en ce que** ladite composition est dépourvue de zinc ou d'oxyde de zinc et d'acide stéarique, ou bien n'en comporte qu'une très faible quantité, préférentiellement moins de 1 pce, de préférence moins de 0,5 pce, plus préférentiellement moins de 0,2 pce.

14. Un pneu comprenant **un** composite selon l'une quelconque des revendications précédentes.

## Patentansprüche

1. Verbundstoff auf Basis mindestens eines Verstärkungselements, welches eine metallische Fläche umfasst, und einer Kautschukzusammensetzung auf Basis von mindestens
a. einem epoxidierten Dien-Elastomer,
b. einem verstärkenden Füllstoff, und
c. mindestens einem System zur Vernetzung des epoxidierten Dien-Elastomers, das mindestens Folgendes umfasst:
- eine Polysäureverbindung, die aus den Organopolyphosphorverbindungen der allgemeinen Formel (I) und den Polysulfonsäureverbindungen der allgemeinen Formel (II) ausgewählt ist, und
- eine Polyphenolverbindung, die mindestens einen aromatischen Ring umfasst, welcher 6 Kohlenstoffatome und mindestens zwei funktionelle OH-Gruppen am selben aromatischen Ring umfasst. 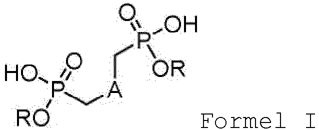 in welcher
- A für eine kovalente Bindung oder eine Kohlenwasserstoffgruppe steht, die mindestens 1 Kohlenstoffatom aufweist, wobei sie gegebenenfalls substituiert ist und gegebenenfalls durch ein oder mehrere Heteroatome unterbrochen ist, und
- die R unabhängige voneinander für eine Kohlenwasserstoffgruppe, die mindestens 1 Kohlenstoffatom aufweist, oder für ein Wasserstoffatom stehen; 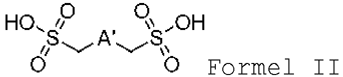 in welcher
- A' für eine kovalente Bindung oder für eine Kohlenwasserstoffgruppe steht welche mindestens 1 Kohlenstoffatom aufweist, wobei sie gegebenenfalls substituiert und gegebenenfalls durch ein oder mehrere Heteroatome unterbrochen ist.

2. Verbundstoff nach dem vorhergehenden Anspruch, **dadurch gekennzeichnet, dass** es sich bei dem Metall der metallischen Fläche um Messing oder Stahl handelt.

3. Verbundstoff nach einem beliebigen der vorhergehenden Ansprüche, **dadurch gekennzeichnet, dass** es sich bei der Polysäureverbindung um eine Disäure handelt.

4. Verbundstoff nach einem beliebigen der vorhergehenden Ansprüche, **dadurch gekennzeichnet, dass** es sich bei der Kohlenwasserstoffgruppe, die mindestens 1 Kohlenstoffatom aufweist, wobei sie gegebenenfalls substituiert ist und gegebenenfalls durch ein oder mehrere Heteroatome unterbrochen ist, und die den Begriffsbestimmung von A oder von A' entspricht, um eine zweibindige Kohlenwasserstoffgruppe handelt, die mindestens 2 Kohlenstoffatome, stärker bevorzugt mindestens 4 Kohlenstoffatome und höchstens 100 Kohlenstoffatome, vorzugsweise höchstens 65 Kohlenstoffatome, stärker bevorzugt höchstens 30 Kohlenstoffatome aufweist.

5. Verbundstoff nach einem beliebigen der vorhergehenden Ansprüche, **dadurch gekennzeichnet, dass** das Vernetzungssystem des epoxidierten Dien-Elastomers eine Imidazol-Verbindung umfasst.

6. Verbundstoff nach einem beliebigen der vorhergehenden Ansprüche, **dadurch gekennzeichnet, dass** die R vollkommen gleichartig sind und für eine Alkylgruppe mit 1 bis 12 Kohlenstoffatomen, vorzugsweise 1 bis 4 Kohlenstoffatomen stehen.

7. Verbundstoff nach einem beliebigen der vorhergehenden Ansprüche, **dadurch gekennzeichnet, dass** die Polyphenolverbindung einen aromatischen Ring mit 6 Kohlenstoffatomen und mindestens zwei funktionelle OH-Gruppen am selben aromatischen Ring umfasst, wobei sie der allgemeinen Formel (III) entspricht 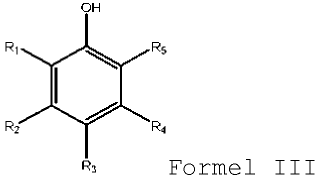 in welcher die Gruppen R₁, R₂, R₃, R₄ und R₅ unabhängig voneinander Gruppen bezeichnet, die aus dem Wasserstoffatom, den Resten Hydroxyl, Thiol, Hydroxyalkenyl, Carboxyl, Hydrogenocarbonyl, Alkyl, Carboxylalkyl, Carboxylalkenyl, Carbonylalkyl, Aryl, Aryloxy, Arylthioxy, Arylcarbonyl, Amino, Aminoalkyl, aus Ethern, Estern, Thioestern ausgewählt sind, mit der Maßgabe, dass mindestens eines von R₁, R₂, R₃, R₄ und R₅ einen Hydroxylrest bezeichnet.

8. Verbundstoff nach einem beliebigen der Ansprüche 1 bis 6, **dadurch gekennzeichnet, dass** es sich bei der Polyphenolverbindung um ein Verbindung handelt, die mindestens zwei, vorzugsweise mindestens drei aromatische Ringe umfasst, welche mindestens 6 Kohlenstoffatome umfassen, wobei jeder Ring mindestens 2 funktionelle OH-Gruppen umfasst.

9. Verbundstoff nach dem vorhergehenden Anspruch, wobei es sich bei der Polyphenolverbindung um Tanninsäure handelt.

10. Verbundstoff nach einem beliebigen der vorhergehenden Ansprüche, **dadurch gekennzeichnet, dass** der verstärkende Füllstoff überwiegend Ruß aufweist.

11. Verbundstoff nach einem beliebigen der Ansprüche 8 und 9, **dadurch gekennzeichnet, dass** der verstärkende Füllstoff überwiegend Siliciumdioxid aufweist.

12. Verbundstoff nach einem beliebigen der vorhergehenden Ansprüche, **dadurch gekennzeichnet, dass** die Zusammensetzung frei von Cobaltsalzen ist oder weniger als 1 phe davon enthält.

13. Verbundstoff nach einem beliebigen der vorhergehenden Ansprüche, **dadurch gekennzeichnet, dass** die Zusammensetzung frei von Zink oder Zinkoxid und Staerinsäure ist, oder davon nur eine sehr geringe Menge aufweist, vorzugsweise weniger als 1 phe, bevorzugt weniger als 0,5 phe, stärker bevorzugt weniger als 0,2 phe.

14. Luftreifen, der einen Verbundstoff nach einem beliebigen der vorhergehenden Ansprüche umfasst.

## Claims

1. Composite based on at least one metallic reinforcing element comprising a metallic surface and on a rubber composition based on at least
a. an epoxidized diene elastomer,
b. a reinforcing filler, and
c. a system for crosslinking the epoxidized diene elastomer comprising at least:
- a polyacid compound selected from organopolyphosphorus compounds of general formula (I) and polysulfonic acids of general formula (II), and
- a polyphenol compound comprising at least one aromatic ring comprising 6 carbon atoms and at least two hydroxyl -OH functions on the same aromatic ring, 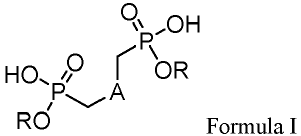 in which
- A represents a covalent bond or a hydrocarbon group comprising at least 1 carbon atom, which is optionally substituted and optionally interrupted by one or more heteroatoms, and
- the R symbols represent, independently of one another, a hydrocarbon group comprising at least 1 carbon atom or a hydrogen atom; 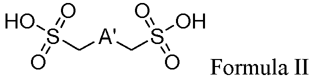 in which
- A' represents a covalent bond or a hydrocarbon group comprising at least 1 carbon atom, which is optionally substituted and optionally interrupted by one or more heteroatoms.

2. Composite according to the preceding claim, **characterized in that** the metal of the metallic surface is brass or steel.

3. Composite according to any one of the preceding claims, **characterized in that** the polyacid compound is a diacid.

4. Composite according to any one of the preceding claims, **characterized in that** the hydrocarbon group comprising at least 1 carbon atom, which is optionally substituted and optionally interrupted by one or more heteroatoms, coming within the definition of A or of A', is a divalent hydrocarbon group comprising at least 2 carbon atoms, more preferentially at least 4 carbon atoms, and at most 100 carbon atoms, preferably at most 65 carbon atoms, more preferentially at most 30 carbon atoms.

5. Composite according to any one of the preceding claims, **characterized in that** the system for crosslinking the epoxidized diene elastomer comprises an imidazole compound.

6. Composite according to any one of the preceding claims, **characterized in that** the R symbols are identical and represent an alkyl group having from 1 to 12 carbon atoms, preferably from 1 to 4 carbon atoms.

7. Composite according to any one of the preceding claims, **characterized in that** the polyphenol compound comprises an aromatic ring of 6 carbon atoms and at least two hydroxyl -OH functions on the same aromatic ring, and corresponds to the general formula (III) 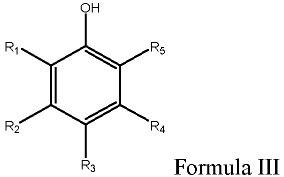 in which the R₁, R₂, R₃, R₄ and R₅ groups, independently of one another, denote groups selected from a hydrogen atom, the radicals hydroxyl, thiol, hydroxyalkenyl, carboxyl, hydrogenocarbonyl, alkyl, carboxylalkyl, carboxylalkenyl, carbonylalkyl, aryl, aryloxy, arylthioxy, arylcarbonyl, amino, aminoalkyl, ethers, esters, and thioesters, with the proviso that at least one of R₁, R₂, R₃, R₄ and R₅ denotes a hydroxyl radical.

8. Composite according to any one of Claims 1 to 6, **characterized in that** the polyphenol compound is a compound comprising at least two, preferably at least three, aromatic rings comprising 6 carbon atoms, each ring comprising at least 2 hydroxyl -OH functions.

9. Composite according to the preceding claim, in which the polyphenol compound is tannic acid.

10. Composite according to any one of the preceding claims, **characterized in that** the reinforcing filler predominantly comprises carbon black.

11. Composite according to either of Claims 8 and 9, **characterized in that** the reinforcing filler predominantly comprises silica.

12. Composite according to any one of the preceding claims, **characterized in that** said composition is devoid of cobalt salts or contains less than 1 phr thereof.

13. Composite according to any one of the preceding claims, **characterized in that** said composition is devoid of zinc or zinc oxide and of stearic acid, or else only comprises a very small amount thereof, preferentially less than 1 phr, preferably less than 0.5 phr, more preferentially less than 0.2 phr.

14. A tyre comprising a composite according to any one of the preceding claims.
